# EUROPEAN PATENT SPECIFICATION

(11) **EP 2 720 903 B1**
(45) Date of publication and mention of the grant of the patent: **23.09.2015**
(21) Application number: 12727657.4
(22) Date of filing: 14.06.2012
(51) Int. Cl.: B60N 2/28

(54) **BASE FOR A CHILD SAFETY SEAT**
BASIS FÜR EINEN KINDERSICHERHEITSSITZ
BASE POUR SIÈGE DE SÉCURITÉ ENFANT

(30) Priority: 14.06.2011 NO 20110855
(43) Date of publication of application: 23.04.2014
(73) Proprietor: HTS HANS TORGERSEN & SØNN A/S, 3535 Krøderen (NO)
(72) Inventor: VAN MOURIK, Okke, NL-3514 BS Utrecht (NL); VAN DER VEER, Erik, NL-3533 AD Utrecht (NL); WESTMAN, Johan, S-332 31 Gislaved (SE)
(74) Representative: Onsagers AS
(86) International application number: PCT/EP2012/061303
(87) International publication number: WO 2012/172001

(56) References cited:
- EP-A1- 1 714 826
- WO-A2-2005/108155
- WO-A2-2007/101212
- CN-U- 201 769 704
- CN-Y- 201 214 380

## Description

The present invention regards generally a child safety seat which is releasably connected to a base frame and more particularly to a child safety seat to be used in a vehicle with an adult seat equipped with anchorage means for Isofix connectors.

Most child safety seat's that are on the marked today are secured in a vehicle seat by using a vehicle's three-point safety seat belt. However, vehicle seats, safety seat belts and their anchorage points vary greatly between different models of vehicles; the seats have different shapes, the safety seat belts may be shorter or longer, the position of the anchorage points differs etc. This together with that the shape and the design of the child safety seat's may vary so much that it will make it complicated or even impossible to correctly secure the child safety seat in the vehicle.

Based on the above mentioned compatibility problems, there has arisen a need for a standard system for securing a child safety seat in a vehicle. In an attempt to standardize the securing of the child safety seat to a seat assembly for a vehicle, seat assemblies have been modified to accomplish this means. In particular, anchorage points in the form of loop fasteners are secured to a frame of the seat assembly, between the seat section and the back section of the seat assembly. These loop fasteners are commonly referred to as Isofix steel bars. The child safety seats are therefore provided with so-called Isofix connectors, where the Isofix connectors are in the form of latches or clips that can engage the loop fasteners to provide a positive attachment of the child safety seat to the seat assembly.

Isofix connectors will, compared with ordinary vehicle's safety seat belts, provide a better protection in the event of a frontal and/or rear collision with the vehicle, but will also concern some of the compatibility problems that are mentioned above for the child safety seat's that are secured with a vehicle's safety seat belt. For instance, if the Isofix connectors are not adjustable but fixed to a child safety seat or a base of the child safety seat, this may cause several problems when installing the child safety seat to a vehicle seat: if the loop fasteners are placed extremely low in a vehicle seat a child safety seat with fixed and straight arranged Isofix connectors cannot be placed lying flat on the sitting section of the vehicle seat, because the padding of the vehicle seat will tend to lift up the child safety seat from the vehicle seat. Furthermore, if the loop fasteners are placed deep into the vehicle seat, it will be difficult to find and connect the Isofix connectors to the loop connectors while at the same time holding the child safety seat.

EP 1.714.826 A1 (corresponding to the preamble of claim 1) discloses a chassis which is suitable for supporting a child vehicle seat, where the chassis comprises a frame with connectors that can be detachably connected in use to securing elements in a vehicle. The chassis is further provided with an unlocking mechanism for releasing the engagement between the connector and the securing element. The chassis is also provided with a slide for supporting the child vehicle seat, which slide is movable with respect to the frame from a first position, in which the slide is positioned at a relatively large distance from the connector, to a second position, in which the slide is positioned closer to the connector. The slide is locked against movement from the second position to the first position when at least one connector is connected to the securing element.

WO 2007/101212 A2 discloses a child safety seat assembly, including a base for being positioned on a vehicle seat bottom. The base includes an Isofix-type latch for attachment of the base to an Isofix bar of the vehicle seat, and a separate seat belt lock-off for allowing the base to be secured to the vehicle seat by means of the vehicle seat belt. A child carrier is provided for being releasably attached to the base. The carrier includes a handle for allowing the carrier to be lifted and carried. The handle includes a latching assembly for releasably locking the carrier to the base and detaching the carrier from the base with a single hand.

WO 2005/108155 A2 discloses a base for a child safety seat to be used with an adult seat in a vehicle equipped with Isofix loops, where the base comprises an upper moulding and a lower moulding screwed and clipped together. The upper moulding comprises a pair of front humps and a pair of rear humps with a flat portion between the pairs. The humps have moulded recesses for the front and rear anchor bars of a conventional infant carrier. Below release button the base has formation for pivotal connection of foot prop is clipped up under the base, anti-rebound flap is folded against the prop and Isofix latches are pivoted in towards the front of the base. For use, the Isofix latches are turned backwards, anti-rebound member is swung around from below to above the base and foot prop is extended down to abut the floor. To fit infant carrier, its anchor bars are engaged in recesses and the infant carrier is pushed down to push hooks away.

The object of the present invention is to provide a base which is releasably connected to a child safety seat and which base offer an easy installation of the children's safety seat in the vehicle.

A further object of the present invention is to provide a base which minimizes the risk of misuse.

The objects are obtained by the base according to the present invention as defined in the characterizing part of the independent claim. Further embodiments of the invention are defined in the dependent claims.

According to the present invention, which is defined by the technical features set forth in claim 1, there is provided a base frame, to which base frame a child safety seat releasably can be connected to. The base frame has a lower surface resting on a sitting section of a passenger's seat when the base frame is arranged in the passenger's seat. The base frame comprises further a support surface for the child safety seat and a fastening mechanism for the child safety seat, in order to secure the child safety seat to the base frame. The base frame is also provided with engagement means in order to be connected to anchorage means that are arranged in the passenger's seat.

The fastening mechanism of the base frame comprises a main part, to which main part two pairs of arms are attached. A locking hook is then pivotally connected to an end of each of the arms of the two pairs of arms, where the locking hooks in one embodiment are spring-loaded. Each of the locking hooks is provided with a locking means, for instance a hook part with a taper form. Furthermore, the locking hooks are connected to at least one Isofix connector indicator element, where the Isofix connector indicator element is connected to an indicator device. Furthermore, the fastening mechanism is connected to a handle which is utilized to release the child safety seat from the base frame.

The engagement means of the base frame comprises one or more Isofix connectors, where the one or more Isofix connectors are to be locked to anchorage means that are provided in the passenger's seat. In one embodiment of the present invention the Isofix connectors are adjustable, such that they can be adjusted between a retracted position within the base frame (partly or wholly inside the base frame) and an extended position outside the base frame. The Isofix connectors can then be fitted to be used with different vehicle models and/or vehicle seats. In addition, the Isofix connectors may also be arranged to be pivotable, such that the Isofix connectors can be angled relative to the base frame.

In order to be able to adjust the Isofix connectors, the Isofix connectors are connected to an adjustment mechanism, where the adjustment mechanism comprises at least one rail provided with a plurality of cams and a locking device connected to a handle. According to the present invention the locking device comprises a lever and a locking hook, where one end of the lever is connected to the handle while an opposite end of the lever is pivotally connected to the locking hook, the locking hook then cooperating with the plurality of cams of the at least one rail.

Anchorage means, to which the Isofix connectors are to be connected, may for instance be in the form of loop fasteners that are secured to a frame of the seat assembly of the vehicle.

An adjustable floor support is also connected to the base frame, where the adjustable floor support will stabilize the base frame further when the base frame is arranged in the passenger's seat and connected to the anchorage means in the vehicle seat.

The child safety seat preferably comprises a head section, a back section and a sitting section. However, it is to be understood that the child safety seat may be comprised of fewer or more sections.

The foregoing and other features of the present invention will become apparent to one skilled in the art to which the present invention relates upon consideration of the following description of the invention with reference to the accompanying drawings, wherein:
Figures 1A-1B show a base frame for a child safety seat according to the present invention, where the base frame for the child safety seat is provided to be attached to an adult seat in a vehicle by use of Isofix connectors,
Figures 2A-2B show a fastening and adjustment mechanism of the base frame arranged in the base frame according to the present invention, where the fastening mechanism is used to releasably connect the child safety seat to the base frame and the adjustment mechanism is used to adjust the Isofix connectors to anchorage points arranged in the adult seat in the vehicle, the base being shown from under and above,
Figure 3A-3D show how the children's safety seat is connected to and released from the base frame according to the present invention,
Figure 4A-4C show in greater detail the working principle of the fastening and adjustment mechanism for Isofix connectors when the base according to the present invention is connected to the adult seat of the vehicle, and
Figures 5A-5D show an indicator and release mechanism for the Isofix connectors in the base.

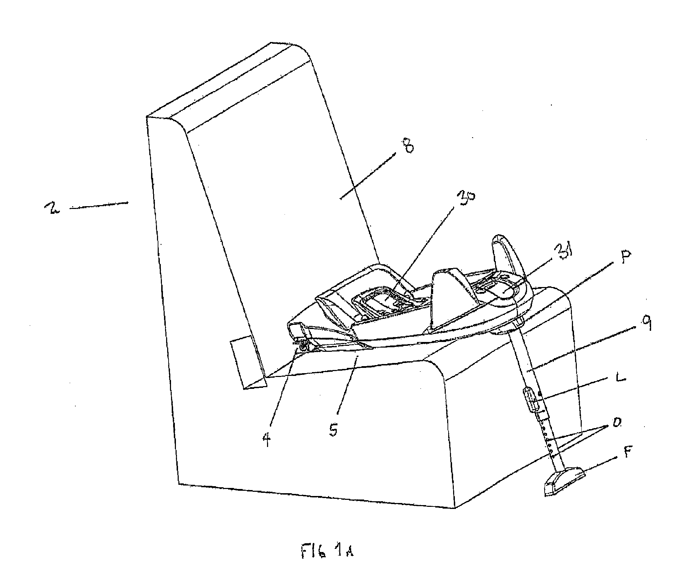

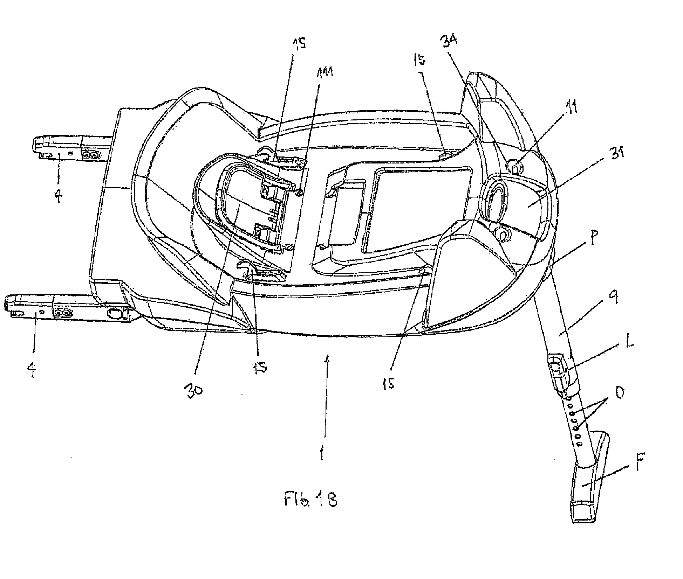

In figures 1A and 1B is shown a base according to the present invention, where figure 1A show in a perspective view how the base 1 is arranged when connected to an adult seat 2 in a vehicle, and figure 1B shows in greater details the same base 1 but where the adult seat 2 is removed.

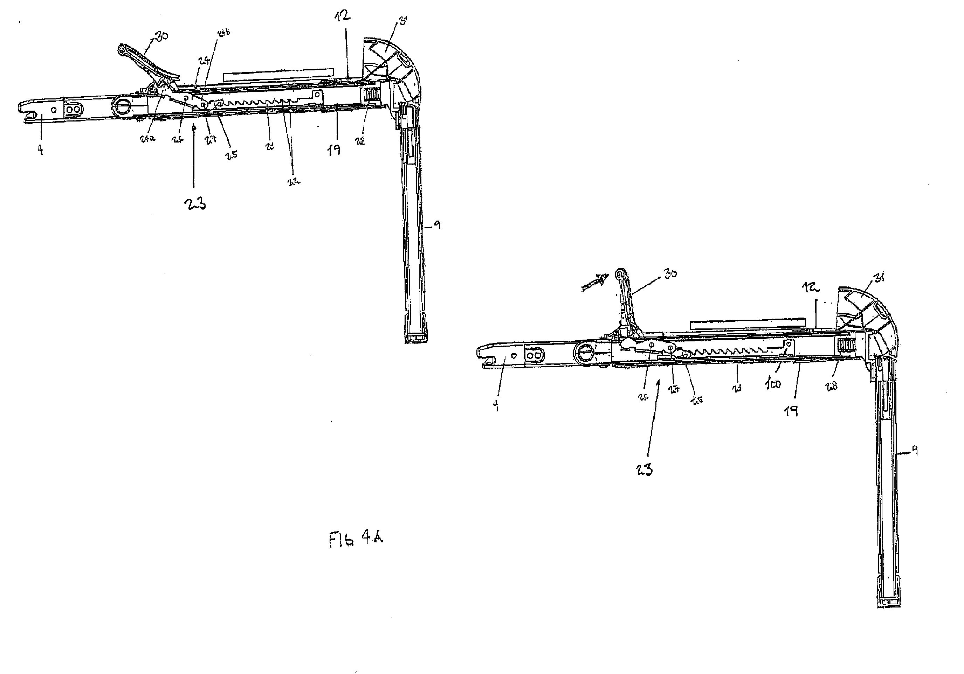

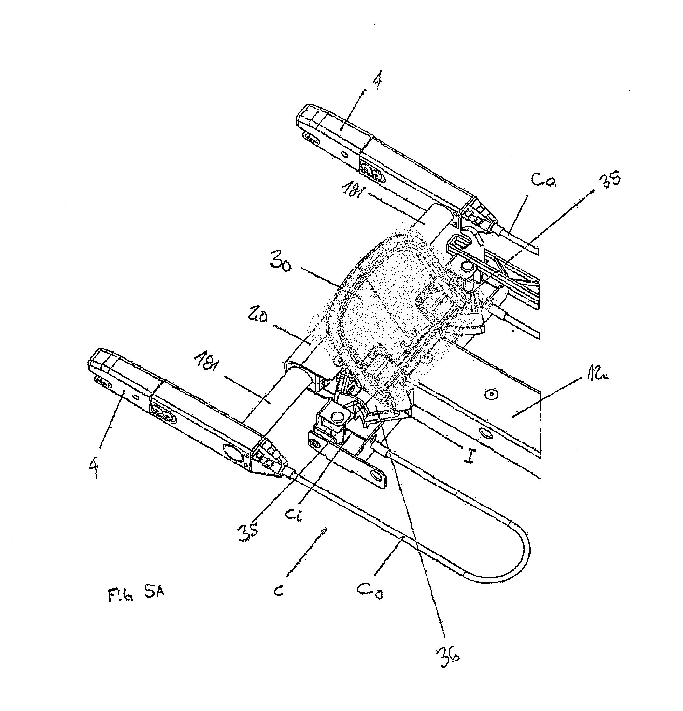

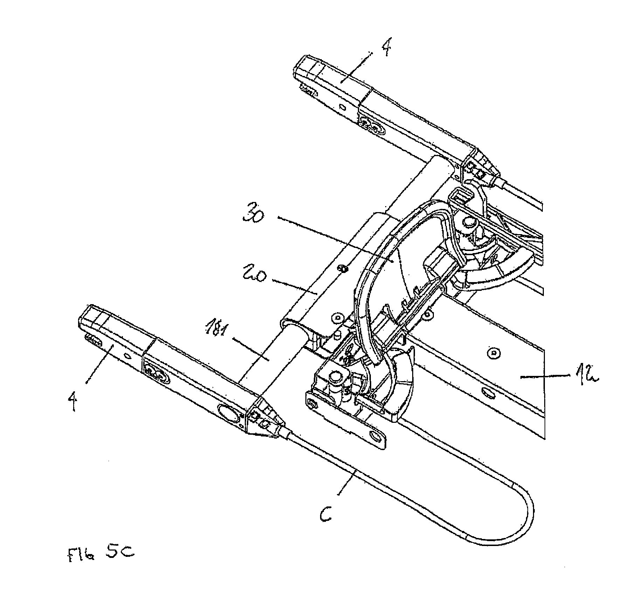

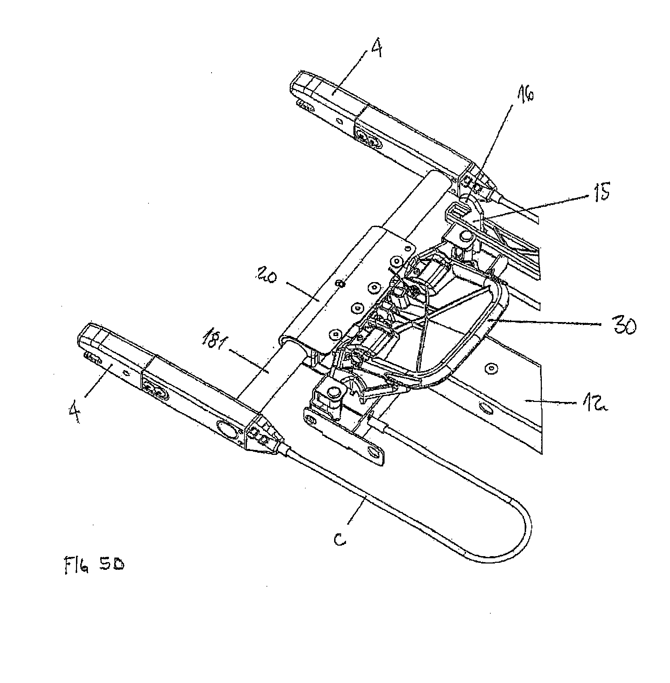

The base 1 according to the present invention is provided with at least two Isofix connectors 4, where the Isofix connectors 4 are to be connected to anchorage means (not shown) arranged in the adult seat 2 of the vehicle. The Isofix connectors 4 are arranged at a distance between each other, each of the Isofix connectors 4 being located towards ends of short sides of the base 1. When not in use, the Isofix connectors 4 are arranged partly or wholly in recesses or voids (not shown) within the base 1, in a retracted position, where the recesses or voids are arranged in the vicinity of a surface of the base 1 that is resting on a sitting section 5 of the adult seat 2. When the Isofix connectors 4 are to be used to secure the base 1 to the adult seat 2, the Isofix connectors 4 are brought to an extended position outside the base 1, whereby the Isofix connectors 4 can be connected to anchorage means (not shown) in the adult seat 2. The arrangement of the Isofix connectors 4 will be explained in detail in accordance with figures 4A-4C and 5A-5D.

The Isofix connectors 4 are arranged to be adjustable in a longitudinal direction of the base 1, such that they can be moved between a retracted position within the base 1 and an extended position outside the base 1. The Isofix connectors 4 being adjustable will provide the opportunity to adapt the base 1 to different vehicle models and/or vehicle producers, as the seats and/or anchorage means in these vehicles may vary greatly in construction and/or design. The Isofix connectors 4 can then be extended from or retracted into the base 1, such that the base 1 can be arranged adjacent and possibly in contact with a back section 8 of the adult seat 2. This arrangement will stabilize the base 1 in the adult seat 2, such that the base 1 will not move laterally and/or about the anchorage means during a collision.

Furthermore, the Isofix connectors 4 are also provided to be pivotable around an axis of rotation, where this will give the user opportunity to also adjust the angle that the Isofix connectors 4 have relative to the base 1.

The base 1 comprises further an adjustable floor support 9, which floor support 9 will stabilize the base 1 further when the base 1 is arranged in the adult seat 2 and connected to the anchorage means (not shown) in the vehicle seat 2. The adjustable floor support 9 is connected to the base 1 through a pivot connection P, such that the adjustable floor support 9 can be rotated up under the surface of the base 1 that is resting on a sitting section 5 of the adult seat 2 when the base 1 is not in use. A snap locking device (not shown) arranged with the pivot connection P will then lock the floor support 9 in a supportive position, as shown in figures 1A-1B. In this supportive position a foot element F will rest against a floor in the vehicle. When the floor support 9 is to be rotated up under the underside of the base 1, the floor support 9 can be pulled out of the snap locking device (not shown) and rotated up under the underside of the base 1. Furthermore, the floor support 9 is comprised of two coaxial sleeves, one sleeve being arranged inside the other. The outer sleeve, having a greater diameter than the inner sleeve, is then provided with a spring-loaded mechanism L. The inner sleeve is provided with a plurality of holes or openings O in its longitudinal direction, which holes or openings O are adapted to accommodate or receive the spring-loaded mechanism L. By pressing in the spring-loaded mechanism L, the inner and outer sleeves can be adjusted relative each other.

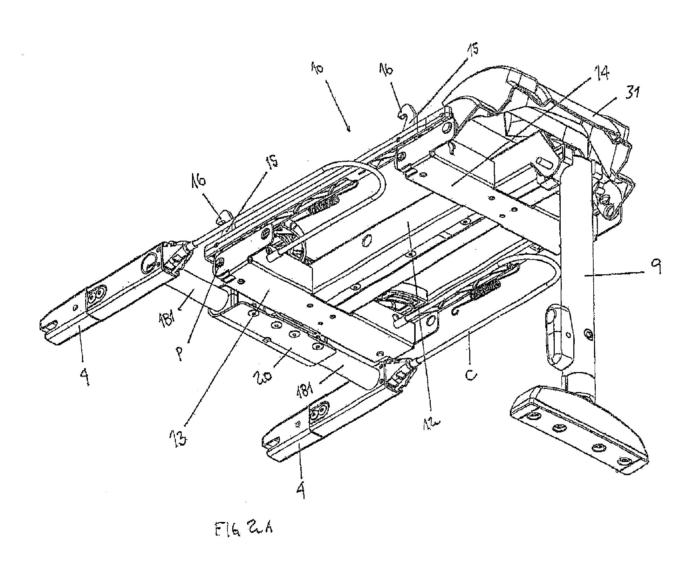

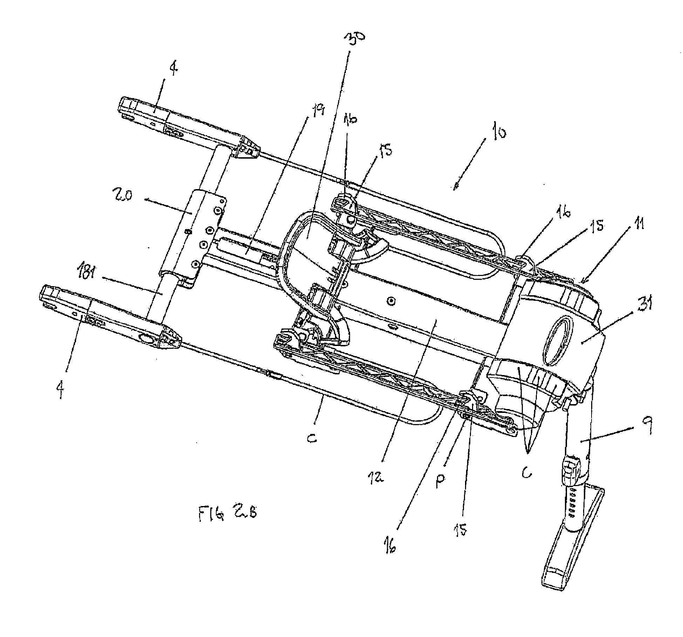

Furthermore, the base 1 is provided with a fastening and adjustment mechanism 10 (see figures 2A and 2B) for the child safety seat S and the Isofix connectors 4, such that the child seat S can be releasably connected to the base 1 and the Isofix connectors 4 can be adjusted between a retracted and extended position. As is it crucial that the child safety seat S is correctly and firmly connected to the base 1 during the use of the child safety seat S, the fastening and adjustment mechanism 10 comprises an indicator device 11, 111. The indicator device 11, 111 will be explained in detail later.

The base 1 according to the present invention comprises also two handles 30, 31, i.e. a first handle 31 and a second handle 30, where the second handle 30 is used to operate, i.e. to release or to lock the Isofix connectors 4 relative to the base 1, while the first handle 31 is used to release the child safety seat S from the base 1. In this respect the handle 30 is connected to the indicator device 111 and to a locking device 23 cooperating with a plurality of cams 22 of a rail 21, while the handle 31 is connected to at least one locking hook 15 and the indicator device 11.

The base 1 of the present invention has preferably a rectangular form, but it is to be understood that the base 1 also can have other forms.

Figure 2A show the base 1 from an underside of the base 1 according to the present invention, where the Isofix connectors 4 can be seen in a retracted position, while figure 2B show the base 1 from above, where the Isofix connectors 4 are seen in an extended position. Furthermore, in figures 2A-2B an outer shell of the base 1 is removed in order to show the different elements of the base 1.

Figures 2A-2B show the construction of the fastening and adjustment mechanism 10 for the child safety seat S and the Isofix connectors 4, where it can be seen that the fastening and adjustment mechanism 10 comprises a main part 12, to which main part 12 a pair of arms 13, 14 are attached. The pair of arms 13, 14 are arranged at a distance from each other, towards each end of the main part 12. A locking hook 15 is pivotally connected P to an end of each of the arms of the pair of arms 13, 14. The locking hooks 15 are spring-loaded, where a spring (not shown) will hold the hooks 15 in an initial position as shown in the figure.

The locking hooks 15 have a hook part 16, where the hook part 16 has a taper form. The shaping or design of the hook part 16 will provide an easy connection with the child safety seat S, as explained later in the description.

As the Isofix connectors 4 according to the present invention are provided to be adjustable, the Isofix connectors 4 are arranged to be movable relative to the fastening and adjustment mechanism 10. Each of the Isofix connectors 4 is then pivotally fastened to a rod 181, where the rod 181 is connected to an elongated element 19 through a connection piece 20. The main part 12 of the fastening and adjustment mechanism 10 is hollow, whereby the elongated element 19 can slide in and out of the main part 12. The elongated element 19 will then have a cross-section that is slightly smaller than a cross-section of the hollow main element 12.

In figure 2A, the Isofix connectors 4 are arranged in a retracted position within the recesses (not shown) in the base 1, while figure 2B show the Isofix connectors 4 in an extended position outside the recesses in the base 1. The elongated element 19, being connected to the Isofix connectors 4 through the connection piece 20, comprises at least one rail 21 arranged inside the elongated element 19, where the at least one rail 21 is provided with a plurality of cams 22. In the retracted position of the Isofix connectors 4, the elongated element 19 will be arranged inside the hollow main element 12. Furthermore, a locking device 23 is arranged inside the main part 12, where the locking device 23 will cooperate with a plurality of cams 22 of the at least one rail 21, in order to lock the Isofix connectors 4 in a desired position. Referring now to figures 4A-4C, the locking device 23 comprises a lever 24 and a locking hook 25. One end 24a of the lever 24 will then be connected to the handle 30 that is used to operate the Isofix connectors 4, while an opposite end 24b of the lever 24 then will be pivotally connected to the locking hook 25 by a bolt or rod 27. Furthermore, the lever 24 is pivotally connected to the main element 19 through a bolt or rod 26.

In figures 4A the Isofix connectors 4 are fully retracted within the recess in the base 1. In this position the rod 27 is engaged with an outermost cam 22 of the rail 21 and the lever 24 is used to lock the rod 27 in this position. A stop element 100 provided on the at least one rail 21 will on the other side prevent that the Isofix connectors 4 can be pulled further out from the main element 12.

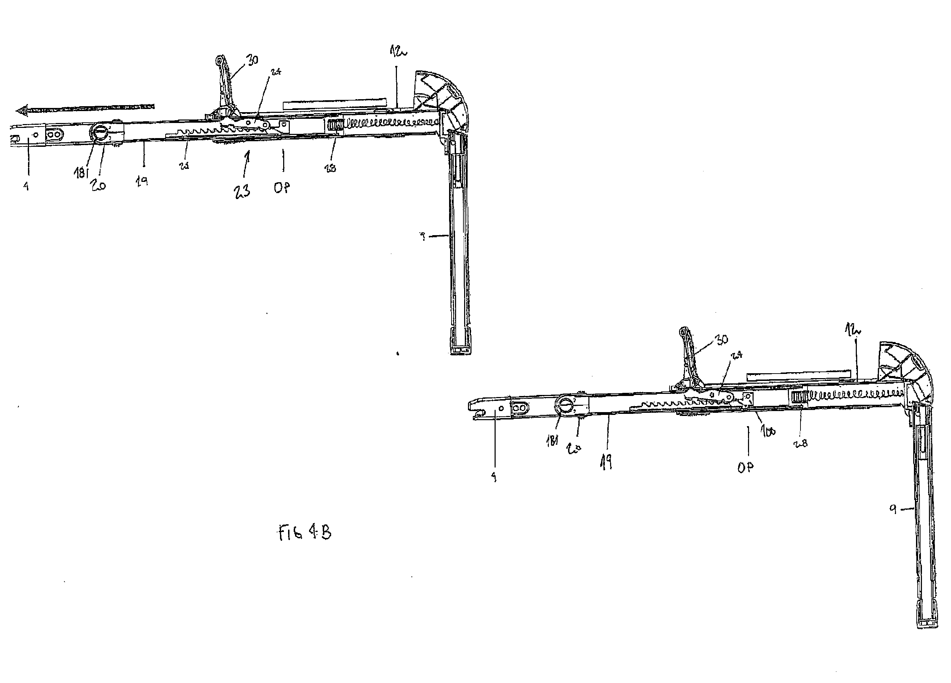

When the base 1 is to be installed in the adult seat 2, the handle 30 (see also lower part of figure 4A) is lifted or moved towards right in the figure 4A, to a substantially upright position. The movement of the handle 30 will cause that the end 24a of the lever 24 is pressed down towards the rail 21, while the end 24b of the lever 24 will be pressed upward and away from the rail 22, as the lever 24 will pivot around the bolt or rod 26. Furthermore, as the end 24b is moved away from the rail 21, and the lever 24 is connected to the locking hook 25 by the bolt or rod 27, the rod 27 will be brought out of contact with the cams 22 in the rail 21. The rail 21 is now released from the locking device 23 (the rod 27 is not in engagement with the cams 22), whereby a compressed spring 28 arranged inside the hollow main part 12 (due to the retracted position of the Isofix connectors 4), will be able to push the elongated element 19 in the longitudinal direction of the base 1 and out of the main part 12 (see figure 4B). As the elongated element 19 is connected to the Isofix connectors 4 through the connection piece 20 and the rods 181, the Isofix connectors 4 will be moved out of the recesses in the base 1, whereby the Isofix connectors 4 can be pulled out to a most outward position OP, in which position OP the locking hook 25 will lock in a hole of the elongated element 19. The Isofix connectors 4 and the base 1 are now fixedly connected making it possible to handle the base 1 and the Isofix connectors 4 as one part. The Isofix connectors 4 are thereafter connected to the corresponding anchorage points (not shown) in the vehicle.

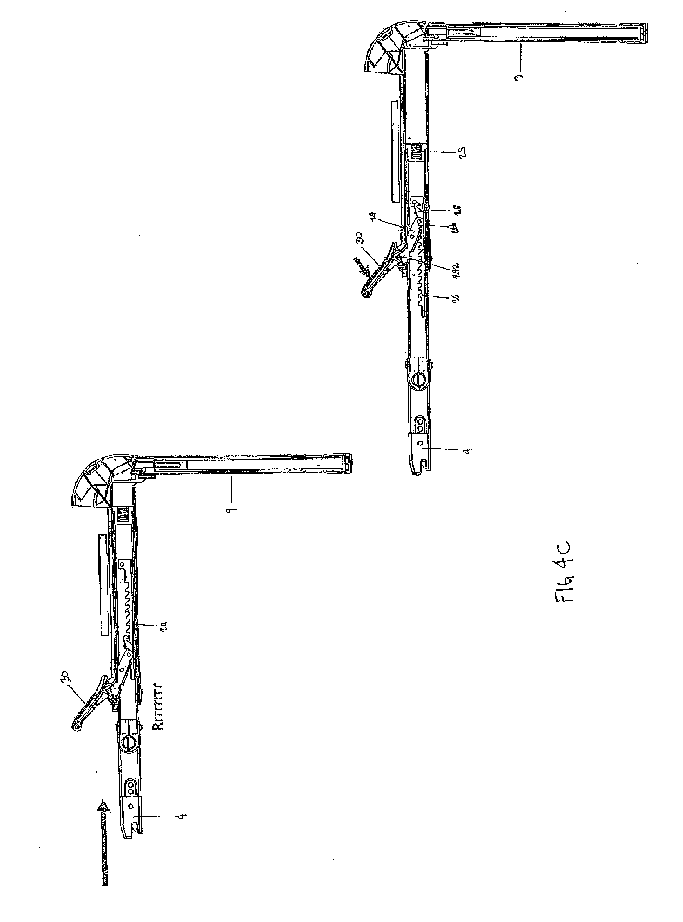

When the Isofix connectors 4 are connected to the anchorage points in the vehicle, as shown in figure 4B, the handle 30 is brought back to its initial position, as shown in lower part of figure 4C. The lever 24 and the locking hook 25 and rod 27 will then undergo an opposite movement of what is explained with respect to figure 4A, whereby the locking rod 27 once again is brought into engagement with a cam 22 in the rail 21. The locking mechanism 23 will thereby lock the rail 21 in this position. However, as the length of the Isofix connectors 4 now can be too long, i.e. that the base 1 is arranged with a certain distance to a back portion 8 of the vehicle seat 2, the base 1 must be pushed into contact with the back portion 8 of the vehicle seat 2. Due to the form of the cams 22 in the rail 21 and the locking mechanism 23, the rail 21, and thereby also the elongated element 19, is allowed to be pushed past the rod 27, whereby the base 1 can be moved into contact with the back portion of the vehicle seat 2.

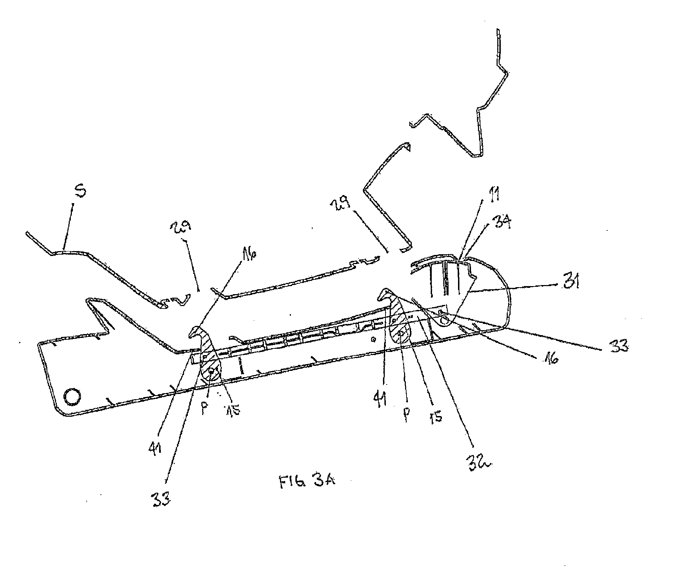

Figures 3A-3D show how a child safety seat S is connected to and released from the base 1 according to the present invention. In order to show how the child safety seat S is connected to the base 1, the shell of the base 1 is removed, such that only the fastening mechanism 10 can be seen.

An underside of the child safety seat S is provided with two pairs of apertures 29, where these apertures 29 are designed for reception of the hook part 16 of the locking hook(s) 15.

The locking hooks 15 can rotate, as the locking hooks 15 are pivotally connected at P) to the end of the pair of arms 13, 14, and the locking hooks 15 are further connected to the release handle 31 through a bar 32 that is arranged on each side of the base 1. Each of the two bars 32 are connected to the locking hook 15 and handle 31 through connection means 33, where the connection means 33 may be bolts or the like. A spring element (not shown) is connected to each of the locking hooks 15, where the spring element will pull or push the locking hooks 15 to an initial position as shown in figure 3A.

In figure 3A the child safety seat S is to be connected to the base 1. The locking hooks 15 are now in their initial position, i.e. in a substantially upright position. In this substantially upright position the locking hooks 15 will abut against plate element 41 in the base 1, where the plate element 41 will prevent the locking hooks 15 to rotate further. As the release handle 31 is connected to the locking hooks 15 through the bars 32, the release handle 31 will also be in its "upper" position. The release handle 31 is furthermore provided with an indicator device 11. As the indicator device 11 shows when the child safety seat S is secured to the base 1, the indicator device 11 is provided with different coloring C over its outer surface.

When the child safety seat S is lowered towards the base 1, the apertures 29 provided on the underside of the child safety seat S will eventually be brought into contact with the hook part 16 of the locking hooks 15. This can be seen in figure 4B, where the apertures 29 just have been brought into contact with the hook part 16 of the locking hooks 15. When the child safety seat S now is lowered further down towards the base 1, the shape of the apertures 29 and the hook part 16 of the locking hooks 15 will force the locking hooks to rotate around the pivot P. Furthermore, as the locking hooks 15 are connected to the bars 32, the rotation of the locking hooks 15 will be transferred to the bars 32, due to the fact that the bars 32 and locking hooks 15 are connected through the connection means 33, whereby the bars 32 will move in the longitudinal direction of the base 1. This movement of the bars 32 in the longitudinal direction of the base 1 will be transferred to a rotational movement for the release handle 31, as also the release handle 31 is connected to each of the bars 32 through the connection means 33. The release handle 31 is pivotally connected P to the base 1, where the pivot connection P is arranged under and at a distance from the connection means 33 that connect the release handle 31 and the bar 32.

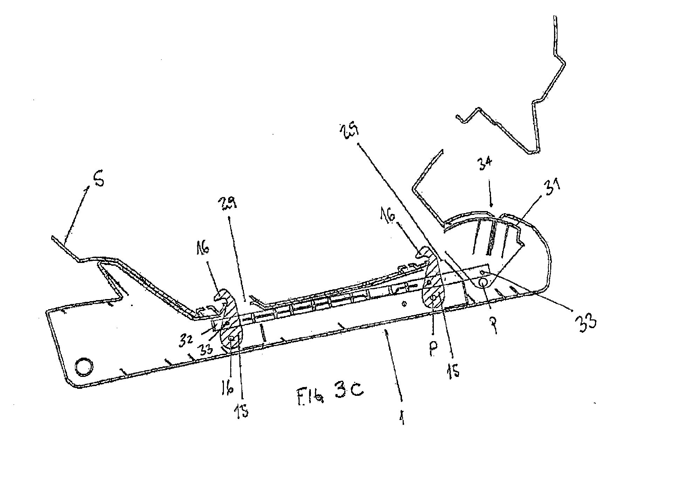

If the child safety seat S now is lowered even further towards the base 1, the apertures 29 will rotate the locking hooks 15 in a clockwise direction, which rotation of the locking hooks 15 will act against the force of the spring element (not shown). The rotation of the locking hooks 15 will also result in that the release handle 31 is rotated in the clockwise direction, as the rotation of the locking hooks 15 is transferred to the release handle 31 through the movement of the bars 32 in the longitudinal direction of the base 1. When the locking hooks 15 are guided beyond the apertures 29 in the underside of the child safety seat S, the spring element (not shown) will force the locking hooks 15 to rotate back to a position where the locking hooks 15 will lock in the apertures 29, whereby the child safety seat S is securely locked to the base 1. This can be seen in figure 3C. However, as the apertures 29 in the underside of the child safety seat S are displaced sideways relative to the plate element 41, whereby the locking hooks 15 now will not resume their initial position, but will be inclined relative to the initial position, thereby not abutting the plate element 41.

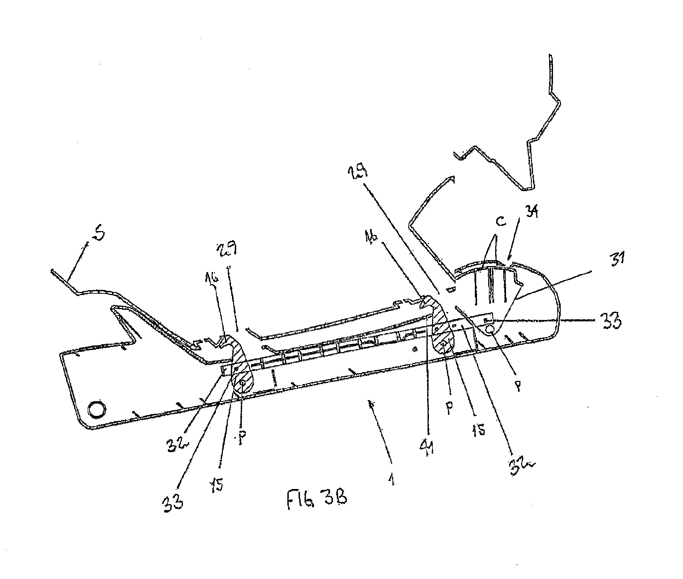

When the child safety seat S is correctly installed onto the base 1, the locking hooks 15 will be somewhat inclined relative to their initial position, where the hook parts 16 of the locking hooks 15 will be pressed against the apertures 29 in the child safety seat S. The locking hooks 15 are now gripping the child safety seat S so it cannot come off the base 1. In the first two situations shown in figures 3A and 3B the position of the indicator device 11 of the release handle 31 indicates that the child safety seat S is not installed at all or not correctly installed. This is made visible by a red (or grey) surface on the outer surface of the indicator device 11, which is visible through an opening 34 in the base 1 (see also figure 1B). In the third position, as shown in figure 3C, the locking hooks 15 and the indicator device 11, the locking hooks 15 and the release handle 31 being connected through the bars 32, are positioned in between the positions shown in figure 3A and figure 3B. This is made visible by a green surface on the indicator device 11 of the release handle 31 which is visible through the opening 34 in the base 1.

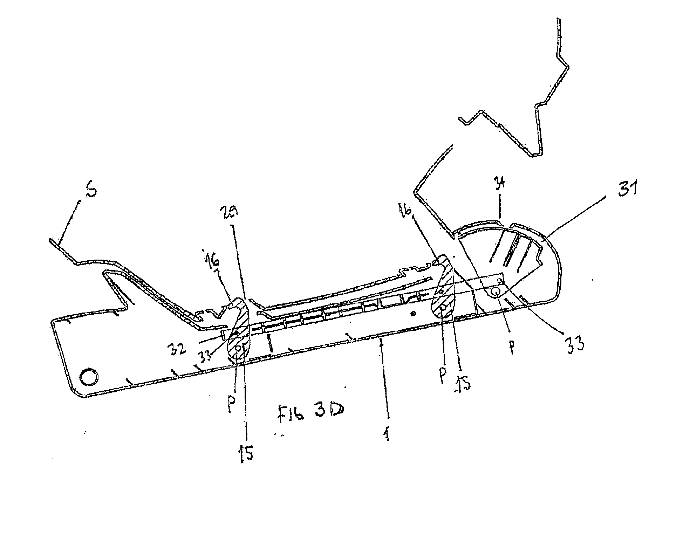

In figure 3D is shown how the child safety seat S is released from the base 1. The release handle 31 is then pulled to rotate. The rotation of the release handle 31 will, due to the fact that the release handle 31 is connected to the locking hooks 15 through the bars 32, also result in that the locking hooks 15 are rotated in a clockwise direction around the pivot P, whereby the hook part 16 of the locking hooks 15 is brought out of abutment of the apertures 29 in the underside of the child safety seat S. Once the hook part 16 is brought out of abutment with the apertures 29, the child safety seat S is released from the base 1, whereby the child safety seat S can be moved away from the base 1.

The Isofix connectors 4 can rotate a certain angle to be able to connect the Isofix connectors 4 to loop fasteners (not shown) which are below the car seat surface. When not connected to loop fasteners, a spring element will force the Isofix connectors 4 always back into its straight position. In this case the Isofix connectors 4 can rotate only limited degrees downwards. When this rotation and spring solution is used in another seat/base it can be easily changed into a system where the rotation is upwards and downwards, and the normal position of the Isofix connectors 4 are straight (not necessarily in the middle). This can be helpful for loop fasteners which are placed high above the car seat surface and where the base/seat needs to rest on the car seat surface instead of hanging above it.

As can be seen in figures 5A-5C, the Isofix connectors 4 are also connected to a cable device C, where the cable device C is comprised of an inner and outer cable Ci, Co. One end of the inner cable Ci is then connected to latches (not shown) of the Isofix connectors 4, while an opposite end of the inner cable Ci of the cable device C is connected to an indicator device 111 in form of an indicator plate I in the base 1, which indicator plate I is provided with a green and a red part. When the latches (not shown) of the Isofix connectors 4 are connected to Isofix anchorage points (not shown) in the adult seat 2 in the vehicle, the inner cable Ci will, due to the movement of the latches, be moved relative to the base 1. The movement of the inner cable Ci will rotate the indicator plate I around an axis of rotation, where the rotation of the indicator plate I will give an indication that the Isofix connectors 4, through the latches (not shown), are connected to the Isofix anchorage points in the adult seat 2. When the Isofix connectors 4 are fixed to the anchorage points in the adult seat 2, an internal connector mechanism of the cable device C will pull the inner cable Ci a few millimeters relative to the outer cable Co of the cable device C.

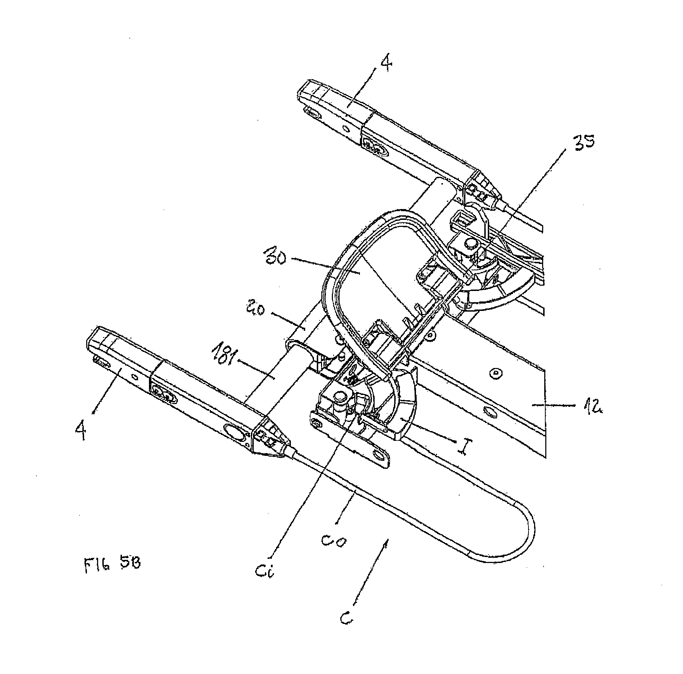

The inner cable Ci will then pull the indicator plate I which will then "turn" green, see also figure 5A. When the Isofix connectors 4 are to be released from the Isofix anchorage points, see also figure 5B, the handle 30 that is used to operate the Isofix connectors 4, is rotated towards a front part of the base 1, towards a substantially upright position. As the handle 30 has a protrusion 35 on each of its ends, which protrusions 35 interfere with an aperture 36 in the indicator plate I, the rotation of the handle 30 will rotate the indicator plate I; the rotation of the indicator plate I will in turn pull the inner-cable Ci, whereby the latches of the Isofix connectors 4 are forced to open.

The invention has now been explained with different embodiments. Only elements related to the invention are described and a skilled person will understand that one may make several alterations and modifications to the described and shown embodiments provided that they remain within the scope of the invention as defined in the following claims.

## Claims

1. A base (1), to which base (1) a child safety seat (S) releasably can be connected to, comprises a floor support device (9), Isofix connectors (4), a support surface for the child safety seat (S) and a fastening and adjustment mechanism (10) for the child safety seat (S) and the Isofix connectors (4), **characterized in that** the fastening and adjustment mechanism (10) comprises a main part (12), to which main part (12) a pair of arms (13, 14) are attached, where the fastening and adjustment mechanism (10) further comprises a release handle (31) which through a bar (32) and connection means (33) is connected to and cooperating with locking hooks (15) pivotally connected (P) to the pair of arms (13, 14) and an indicator device (11), where a rotation of the locking hooks (15) is transferred to the indicator device (11) through a movement of the bar (32) in the longitudinal direction oftha base (1), and a handle (30) which is connected to a locking device (23) comprising a lever (24) and a locking hook (25) cooperating with at least one rail (21) provided with a plurality of cams (22) arranged inside an elongated element (19), to which elongated element (19) the Isofix connectors (4) are connected, where the Isofix connectors (4) further are connected to an indicator device (111) through a cable device (C).

2. Base according to claim 1, **characterized in that** the elongated element (19) is slidably arranged inside the main part (12).

3. Base according to claim 1, **characterized in that** the locking hook (15) is pivotally connected to an end of each of the arms of said pair of arms (13, 14).

4. Base according to claim 1, **characterized in that** the fastening and adjustment mechanism (10) further comprises a spring element (28).

5. Base according to claim 1, **characterized in that** the Isofix connectors (4) are connected to the elongated element (19) through a rod (181) and a connection piece (20).

6. Base according to claim 2, **characterized in that** the main part (12) is provided with a stop device (100).

7. Base according to claim 1 or 3, **characterized in that** the locking hook (15) comprises a hook part (16), the hook part (16) having a taper form.

8. Base according to claim 5, **characterized in that** the Isofix connectors (4) are pivotally connected to the rod (181). :

9. Base according to claim 1 or 8, **characterized in that** the Isofix connectors (4) are provided with a spring element.

10. Base according to claim 1, **characterized in that** the locking device (23) is provided with a stop device, this stop device locking the Isofix connectors (4) in an outermost position of the rail (21).

11. Base according to claim 1, **characterized in that** the handle (30) is used to release the Isofix connectors (4), the handle (30) being not operative when a child safety seat (S) is connected to the base (1).

## Patentansprüche

1. Basis (1), wobei ein Kindersicherheitssitz (S) entnehmbar mit der Basis (1) verbindbar ist, umfassend eine Bodenhaltevorrichtung (9), Isofix-Verbinder (4), eine Haltefläche für den Kindersicherheitssitz (S) und einen Befestigungs- und Einstellmechanismus (10) für den Kindersicherheitssitz (S) und die Isofix-Verbinder (4), **dadurch gekennzeichnet, dass** der Befestigungs- und Einstellmechanismus (10) einen Hauptabschnitt (12) umfasst, wobei ein Paar von Auslegern (13, 14) an dem Hauptabschnitt (12) angebracht sind, wobei der Befestigungs- und Einstellmechanismus (10) ferner einen Freigabe-Handgriff (31), welcher über eine Stange (32) und ein Verbindungselement (33) mit Verriegelungshaken (15) verbunden ist und hiermit zusammenwirkt, welche schwenkbar mit dem Paar von Auslegern (13, 14) verbunden (P) sind, und eine Anzeigevorrichtung (11) umfasst, wobei eine Drehung der Verriegelungshaken (15) über eine Bewegung der Stange (32) in der Längsrichtung der Basis (1) an die Anzeigevorrichtung (11) übertragen wird, und wobei ein Handgriff (30), welcher mit einer Verriegelungsvorrichtung (23) verbunden ist, einen Hebel (24) und einen Verrieglungshaken (25) umfasst, im Zusammenwirken mit zumindest einer Schiene (21), welche mit einer Mehrzahl von Nocken (22) bereitgestellt ist, welche innerhalb eines langgestreckten Elements (19) angeordnet sind, wobei die Isofix-Verbinder (4) mit dem langgestreckten Element (19) verbunden sind, wobei die Isofix-Verbinder (4) ferner über eine Kabelvorrichtung (C) mit einer Anzeigevorrichtung (111) verbunden sind.

2. Basis nach Anspruch 1, **dadurch gekennzeichnet, dass** das langgestreckte Element (19) innerhalb des Hauptabschnitts (12) verschiebbar angeordnet ist.

3. Basis nach Anspruch 1, **dadurch gekennzeichnet, dass** der Verriegelungshaken (15) mit einem Ende von jedem der Ausleger von dem Paar von Auslegern (13, 14) schwenkbar verbunden ist.

4. Basis nach Anspruch 1, **dadurch gekennzeichnet, dass** der Befestigungs- und Einstellmechanismus (10) ferner ein Federelement (28) umfasst.

5. Basis nach Anspruch 1, **dadurch gekennzeichnet, dass** die Isofix-Verbinder (4) über eine Stange (181) und ein Verbindungsstück (20) mit dem langgestreckten Element (19) verbunden sind.

6. Basis nach Anspruch 2, **dadurch gekennzeichnet, dass** der Hauptabschnitt (12) mit einer Anschlagvorrichtung (100) bereitgestellt ist.

7. Basis nach Anspruch 1 oder 3, **dadurch gekennzeichnet, dass** der Verriegelungshaken (15) einen Hakenabschnitt (16) umfasst, wobei der Hakenabschnitt (16) eine sich verjüngende Form hat.

8. Basis nach Anspruch 5, **dadurch gekennzeichnet, dass** die Isofix-Verbinder (4) schwenkbar mit der Stange (181) verbunden sind.

9. Basis nach Anspruch 1 oder 8, **dadurch gekennzeichnet, dass** die Isofix-Verbinder (4) mit einem Federelement bereitgestellt sind.

10. Basis nach Anspruch 1, **dadurch gekennzeichnet, dass** die Verriegelungsvorrichtung (23) mit einer Anschlagvorrichtung bereitgestellt ist, wobei die Anschlagvorrichtung die Isofix-Verbinder (4) in einer äußersten Position der Schiene (21) verriegelt.

11. Basis nach Anspruch 1, **dadurch gekennzeichnet, dass** der Handgriff (30) dazu verwendet wird, um die Isofix-Verbinder (4) freizugeben, wobei der Handgriff (30) nicht wirksam ist, wenn ein Kindersicherheitssitz (S) mit der Basis (1) verbunden ist.

## Revendications

1. Base (1), à laquelle base (1), un siège de sécurité pour enfant (S) peut être relié de manière amovible, comprenant un dispositif de support au sol (9), des connecteurs Isofix (4), une surface de support pour le siège de sécurité pour enfant (S) et un mécanisme de fixation et d'ajustement (10) pour le siège de sécurité pour enfant (S) et les connecteurs Isofix (4), **caractérisée en ce que** le mécanisme de fixation et d'ajustement (10) comprend une partie principale (12), à laquelle partie principale (12), une paire de bras (13, 14) sont fixés, où le mécanisme de fixation et d'ajustement (10) comprend en outre une poignée de libération (31) qui, par l'intermédiaire d'une barre (32) et de moyens de liaison (33), est reliée à et coopère avec des crochets de verrouillage (15) reliés de manière pivotante (P) à la paire de bras (13, 14) et à un dispositif d'indication (11), où une rotation des crochets de verrouillage (15) est transférée au dispositif d'indication (11) par l'intermédiaire d'un déplacement de la barre (32) dans la direction longitudinale de la base (1), et une poignée (30) qui est reliée à un dispositif de verrouillage (23) comprenant un levier (24) et un crochet de verrouillage (25) coopérant avec au moins un rail (21) pourvu d'une pluralité de cames (22) agencées à l'intérieur d'un élément allongé (19), auquel élément allongé (19), les connecteurs Isofix (4) sont reliés, où les connecteurs Isofix (4) sont en outre reliés à un dispositif d'indication (111) par l'intermédiaire d'un dispositif de câble (C).

2. Base selon la revendication 1, **caractérisée en ce que** l'élément allongé (19) est agencé de manière coulissante à l'intérieur de la partie principale (12).

3. Base selon la revendication 1, **caractérisée en ce que** le crochet de verrouillage (15) est relié de manière pivotante à une extrémité de chacun des bras de ladite paire de bras (13, 14).

4. Base selon la revendication 1, **caractérisée en ce que** le mécanisme de fixation et d'ajustement (10) comprend en outre un élément de ressort (28).

5. Base selon la revendication 1, **caractérisée en ce que** les connecteurs Isofix (4) sont reliés à l'élément allongé (19) par l'intermédiaire d'une tige (181) et d'un élément de liaison (20).

6. Base selon la revendication 2, **caractérisée en ce que** la partie principale (12) est pourvue d'un dispositif de butée (100).

7. Base selon la revendication 1 ou 3, **caractérisée en ce que** le crochet de verrouillage (15) comprend une partie de crochet (16), la partie de crochet (16) ayant une forme effilée.

8. Base selon la revendication 5, **caractérisée en ce que** les connecteurs Isofix (4) sont reliés de manière pivotante à la tige (181).

9. Base selon la revendication 1 ou 8, **caractérisée en ce que** les connecteurs Isofix (4) sont pourvus d'un élément de ressort.

10. Base selon la revendication 1, **caractérisée en ce que** le dispositif de verrouillage (23) est pourvu d'un dispositif de butée, ce dispositif de butée verrouillant les connecteurs Isofix (4) à une position la plus à l'extérieur du rail (21).

11. Base selon la revendication 1, **caractérisée en ce que** la poignée (30) est utilisée pour libérer les connecteurs Isofix (4), la poignée (30) ne pouvant pas être utilisée lorsqu'un siège de sécurité pour enfant (S) est relié à la base (1).
